# EUROPÄISCHE PATENTSCHRIFT

(11) **EP 2 774 889 B1**
(45) Veröffentlichungstag und Bekanntmachung des Hinweises auf die Patenterteilung: **08.05.2019**
(21) Anmeldenummer: 14000775.8
(22) Anmeldetag: 04.03.2014
(51) Int. Cl.: B66F 17/00, B62D 6/00, B60G 17/0195

(54) **Fahrbare Maschine mit Ladeanlage**
Mobile machine with loading system
Machine mobile comprenant une installation de chargement

(30) Priorität: 04.03.2013 DE 102013003510
(43) Veröffentlichungstag der Anmeldung: 10.09.2014
(73) Patentinhaber: Wacker Neuson Linz GmbH, 4063 Hörsching (AT)
(72) Erfinder: Erlinger, Josef, AT-4174 St. Veit i. Mühlkreis (AT); Thumfart, Harald, AT-4175 Herzogsdorf (AT); Finzel, Robert, AT-4060 Leonding (AT)
(74) Vertreter: Otten, Roth, Dobler & Partner mbB Patentanwälte

(56) Entgegenhaltungen:
- EP-A1- 1 918 136
- WO-A1-2011/110906
- DE-A1- 10 010 011

## Beschreibung

Die Erfindung betrifft eine fahrbare Maschine nach dem Oberbegriff des Anspruchs 1.

Derartige Maschinen können im Betrieb in einen fahrdynamisch instabilen Betriebszustand gelangen, in dem ein Kippmoment entsteht, das die Maschine zum Umkippen bringen kann. Dies kann während der Fahrt beispielsweise durch den Betrieb der Ladeanlage oder durch Fahrmanöver erfolgen.

Zur Vermeidung von Instabilitäten bei stehender Maschine wurden im Stand der Technik bereits Maßnahmen ergriffen, die unter anderem auch Eingang in Industrienormen gefunden haben. So gibt es bereits bei handelsüblichen Teleskopladern Sicherheitseinrichtungen, bei denen die Ladeanlage blockiert wird, sobald ein instabiler Zustand droht.

Bei diesen Sicherungsmaßnahmen spielt der Einfluss der Fahrdynamik oder der Einfluss der Ladeanlage auf die Fahrdynamik auf die Stabilität jedoch keine Rolle. Instabile Betriebszustände können jedoch vielfach durch die Fahrdynamik während der Fahrt der Maschine auftreten. So spielen nicht nur Größen wie die aufgenommenen Last sowie der Status der Ladeanlage eine große Rolle hinsichtlich der Betriebsstabilität, sondern auch Größen wie die Geschwindigkeit, Kurvenradien und insbesondere Beschleunigungen oder Bremsmanöver.

Auch die geometrischen Verhältnisse des Untergrundes während der Fahrt können die Fahrdynamik und somit Maschinenstabilität beeinflussen, beispielsweise Bodenunebenheiten oder -neigungen sowie wechselnde Reibungskoeffizienten des Untergrunds, was insbesondere bei Fahrten im Gelände häufig auftritt.

In der Druckschrift WO 02/18262 A1 ist ein Gabelstapler bekannt geworden, der im Falle des seitlichen Umkippens ausfahrbare Stützen dazu nützt, um das vollständige Kippen zu verhindern und somit dem Fahrer eine größere Sicherheit zu gewährleisten.

Bei diesem Gegenstand ist zwar der Einfluss der Fahrdynamik im Hinblick auf die Instabilität hinsichtlich eines seitlichen Umkippens erkannt, der Nachteil dieser Instabilität bleibt jedoch auch bei diesem Gegenstand erhalten, da das Umkippen nicht verhindert würde.

Mit der Druckschrift DE 103 04 658 A1 ist ein Flurförderfahrzeug bekannt geworden, bei dem eine Einrichtung zur Steuerung der Fahrstabilität vorgesehen wird, die abhängig von einem sensorisch erfassten Fahrzustand erfolgt. Als Steuermaßnahmen werden Lenkbewegungen, Bremsen, die Neigung eines Hubmastes in Fahrtrichtung oder gegen die Fahrtrichtung sowie das Blockieren einer Pendelachse oder Beschleunigen des Fahrzeugs offenbart.

Weiterhin wird mit der Druckschrift DE 10 2009 018 072 eine Arbeitsmaschine offenbart, bei der ein Beschleunigungssensor vorgesehen wird, um die Bewegungsdynamik der Arbeitsmaschine zu überwachen. Neben einem Beschleunigungssensor kann auch ein Neigungssensor vorgesehen werden, um kritische Neigungen der mobilen Arbeitsmaschine rechtzeitig zu erkennen und zu stoppen. Bei dieser Arbeitsmaschine sind Eingriffe in das fahrdynamische Verhalten des Fahrzeugs und in die betriebsbedingte Dynamik des Arbeitsarms vorgesehen.

Zudem ist aus der EP 1 918 136 A1 ein Federungssystem für land- oder bauwirtschaftliche Fahrzeuge bekannt geworden, wobei vermieden werden soll, dass bei der Aktivierung der Federung ein instabiler Zustand herbeigeführt wird.

Darüber hinaus ist aus der DE 100 10 011 A1 ein Flurförderzeug mit einer Stabilisierungseinrichtung zur Erhöhung der Standsicherheit beschrieben, wobei u.a. eine Begrenzung des Radeinschlages vorgesehen ist, um möglichst ein Umkippen des Fahrzuges zu verhindern.

Aufgabe der Erfindung ist es, eine Maschine der einleitend genannten Art vorzuschlagen, mittels der die Betriebssicherheit erhöht ist.

Diese Aufgabe wird ausgehend von einer Maschine nach dem Oberbegriff des Anspruchs 1 durch dessen kennzeichnende Merkmale gelöst. Durch die in den Unteransprüchen genannten Maßnahmen sind vorteilhafte Ausführungen und Weiterbildungen der Erfindung möglich.

Dementsprechend zeichnet sich eine erfindungsgemäße fahrbare Maschine mit Ladeanlage dadurch aus, dass die seitliche Neigungsverstellung oder Verschiebebewegung zwischen dem Fahrwerk und einem Maschinenrahmen und/oder der Ladeanlage vorgesehen ist.

Durch diese Anordnung der Neigungsverstellung kann das Fahrwerk in Bodenkontakt verbleiben, während der Maschinenrahmen mit den daran aufgebauten Maschinenkomponenten eine Neigung quer zur Fahrtrichtung einnehmen kann, die einem drohenden oder einem bereits vorhandenen Kippmoment quer zur Fahrtrichtung entgegenwirkt.

Gemäß der Erfindung wird dabei eine Neige- bzw. Verschiebevorrichtung für eine Maschinenreaktion in Form einer seitlichen, d. h. quer zur Fahrtrichtung gerichteten Neigungsverstellung oder einer seitlichen, quer zur Fahrtrichtung gerichteten Verschiebebewegung der Maschine oder einer Maschinenkomponente vorgesehen, die einem drohenden seitlichen Umkippen der Maschine entgegengerichtet ist.

Eine solche Neigungsverstellung oder Verschiebebewegung kann zu einer stabileren Fahrdynamik der Maschine führen, beispielsweise wenn diese oder eine Maschinenkomponente sich in eine Kurve neigt. Auch bei Fahren in unebenem Gelände kann eine Neigungsverstellung der Maschine einem drohenden Umkippen entgegenwirken.

Eine solche Maschine berücksichtigt somit die Beeinflussung der Fahrdynamik auf die Maschinenstabilität, indem sie durch eine Maschinenreaktion auf die Fahrdynamik einwirkt, um die Gefahr der Instabilität und insbesondere die Gefahr des Umkippens der Maschine zu vermeiden bzw. zu reduzieren. Dabei kann Kippmomenten, insbesondere in Quer-, das heißt in seitlicher Richtung der Maschine vor, während oder nach deren Auftreten entgegengewirkt werden.

Bevorzugt wird die Kontrolleinheit der Maschine so ausgebildet, dass eine selbsttätige Lenkaktion der Maschine als Maschinenreaktion erfolgt. Durch eine Neigung einer Maschinenkomponente kann einem drohenden oder bereits vorliegenden auf das Fahrwerk wirkenden Kippmoment entgegengewirkt werden. Allerdings wird beim Verstellen der Neigung in die dem Kippmoment entgegen gesetzte Richtung zunächst dieses Kippmoment verstärkt, so dass gerade dadurch ein Umkippen ausgelöst werden kann. Dem kann durch eine Lenkbewegung entgegengewirkt werden, wobei der Fahrweg verändert wird. Nach ganz oder teilweise erfolgter Neigungsverstellung kann dann auf den ursprünglich vorgesehenen Fahrweg zurückgekehrt werden, wobei nach der Neigungsverstellung aufgrund der durch die Neigung veränderten Masseverteilung eine verbesserte Kurvenstabilität vorliegt. Auch eine seitliche Verstellung der Ladeanlage während der Fahrt kann zur Stabilisierung der Maschine vorgesehen werden. Insbesondere kann hierzu auch neben etwaigen bereits ohnehin vorhandenen Verstellmöglichkeiten der Ladeanlage eine seitliche Neigungsverstellung und/oder Verschiebebewegung im Bereich der Ladeanlage vorgesehen werden. Auch hierdurch kann einem drohenden oder bereits aufgetretenen Kippmoment entgegengewirkt werden.

Um zusätzlich eine dynamische Stabilität in Längsrichtung der Maschine zu verbessern, kann zusätzlich beispielsweise als Maschinenreaktion auch ein aktives nach vorn oder hinten Neigen der Ladeanlage oder einer anderen Maschinenkomponente verwendet werden, was insbesondere beim Bremsen oder Beschleunigen des Fahrzeugs von Vorteil ist.

Eine seitliche Neigungsverstellung und/oder Verschiebebewegung kann beispielsweise auch im Bereich der Lastaufnahme der Ladeanlage vorgesehen werden, um eine aufgenommene Last zur Stabilisierung der Maschine zu bewegen, d. h. zu neigen oder zu verschieben. Da im Bereich der Ladeanlage in der Regel ohnehin bereits vielfältige Anschlussmöglichkeiten vorhanden sind, um Arbeitsgeräte oder dergleichen beispielsweise hydraulisch zu betreiben, kann in diesem Bereich auch eine Neigungsverstellung oder Verschiebebewegung ohne größeren Zusatzaufwand realisiert werden.

Eine ebenfalls mögliche Maßnahme gegen ein drohendes Umkippen der Maschinen kann in einer seitlichen Neigung oder Verschiebung von Maschinenkomponenten und/oder der von der Ladeanlage geladenen Last bestehen. Auch durch derartige Maßnahmen kann einem Kippmoment in Querrichtung vorgebeugt oder entgegengewirkt werden.

Eine seitliche Neigungsverstellung oder Verschiebebewegung der Maschine oder einer Maschinenkomponente quer zur Fahrtrichtung, wie o. a., kann unterschiedlich realisiert werden. Sie kann bei durchgehenden Achsen beispielsweise auch über eine oder mehrere Pendelachsen bewirkt werden.

Im Falle einer Pendelachse sind beispielsweise bei handelsüblichen Maschinen Sperrzylinder in Gebrauch, um die Pendelachse unter bestimmten Voraussetzungen zu sperren. Durch das Sperren der Pendelachse wird die Stabilitätszone, innerhalb der sich der Maschinenschwerpunkt befinden muss, vergrößert. Im normalen Fahrbetrieb wird diese Sperre freigegeben, sodass ein Niveauausgleich zwischen den beiden Laufrädern der Pendelachse stattfinden kann. Hierdurch werden die Fahreigenschaften, insbesondere bei Geländefahrt verbessert, da hierdurch ein Bodenkontakt beider Laufräder gewährleistet wird.

Eine aktive seitliche Neigungsverstellung der Maschine ist bei diesen bekannten Gegenständen jedoch nicht vorgesehen, kann jedoch zur Verwirklichung der Erfindung beispielsweise durch Druckbeaufschlagung eines solchen Sperrzylinders ohne größeren Zusatzaufwand realisiert werden. Grundsätzlich kann eine seitliche Neigungsverstellung jedoch auch anderweitig, beispielsweise durch separate Hubzylinder oder dergleichen realisiert werden. Somit kann eine Neigungsverstellung auch bei Maschinen vorgesehen werden, die ein anderweitiges Fahrwerk, beispielsweise eine Einzelradaufhängung aufweisen.

Zusätzlich zu den genannten seitlichen Neigungsverstellungen und/oder -verschiebungen können weitere stabilisierende Maßnahmen, wie bereits oben angedeutet, auch im Bereich des Fahrantriebs bzw. des Fahrwerks vorgesehen werden.

Der Fahrantrieb selbst kann durch entsprechende Eingriffe während der Fahrt ebenfalls dazu verwendet werden, um ein drohendes Kippmoment zu reduzieren oder zu vermeiden oder um einem bereits aufgetretenen Kippmoment in einer entsprechenden Reaktion entgegenzuwirken.

So können beispielsweise Lenkaktionen verwendet werden, um das drohende Umkippen der fahrbaren Maschine abzufangen. Auch Beschleunigungs- oder Bremsaktionen können dazu verwendet werden, um die Fahrstabilität im erfindungsgemäßen Sinne zu sichern.

Auch Beschleunigungs- oder Bremsreaktionen können durch Eingriff in den Fahrantrieb oder die Lenkung dazu verwendet werden, den Schwerpunkt der Maschine zu verlagern. Durch Beschleunigung oder Bremsung des Fahrantriebs der Laufräder kann eine Beschleunigung in Längsrichtung der Maschine, durch Lenkbewegungen können Querbeschleunigungen, d. h. Beschleunigungen quer zur Fahrtrichtung der Maschine erzielt werden.

Durch derartige Beschleunigungen, insbesondere Querbeschleunigungen kann eine Schwerpunktsbewegung in die Stabilitätszone der Maschine erreicht werden, um ein seitliches Umkippen, d. h. in Richtung quer zur Fahrtrichtung der Maschine zu verhindern. Die Stabilitätszone liegt im Allgemeinen als Polygon vor, dessen Eckpunkte durch die Auflagepunkte der Maschine auf der Fahrbahn gegeben sind. Im Falle einer Pendelachse bilden dabei nicht deren Laufräder die Auflagepunkte, sondern die Pendelachse bildet einen Eckpunkt eines solchen Stabilitätspolygons.

Für eine stabile Maschinenlage sollte der Schwerpunkt der Maschine innerhalb dieser Stabilitätszone liegen. Neben einer Schwerpunktslageänderung durch die erfindungsgemäße seitliche Verstellung durch Neigung oder durch Verschiebung kann also auch durch eine Beschleunigung, insbesondere eine Querbeschleunigung ein dem bereits vorhandenen oder drohenden Kippmoment entgegenwirkendes Kippmoment erzeugt werden. Sofern der Schwerpunkt durch eine Kippbewegung bereits außerhalb der Stabilitätszone liegt, kann durch eine solche Beschleunigung der Schwerpunkt wieder in die Stabilitätszone zurückgebracht werden. Auch ein im Randbereich der Stabilitätszone liegender Schwerpunkt kann durch eine solche Beschleunigung weiter ins Innere der Stabilitätszone verbracht werden. Eine solche Beschleunigung wird vorteilhafterweise in Wechselwirkung mit der erfindungsgemäßen seitlichen Neigungs- oder Verschiebeverstellung vorgenommen, um deren Wirkung zu unterstützen.

Diese jeweiligen Lenk-, Beschleunigungs- oder Bremsaktionen können durch selbsttätige Betätigung der ohnehin für den Bediener vorgesehenen Lenk-, Antriebs- oder Bremsaktionen vorgenommen werden.

Es können jedoch zusätzlich auch Eingriffe vorgesehen werden, die einem Bediener im Normalbetrieb nicht zur Verfügung stehen. So können unterschiedliche Lenk-, Beschleunigungs- und/oder Bremsaktionen an wenigstens zwei verschiedenen Laufrädern selbsttätig vorgesehen werden.

Im Falle eines Raupenantriebs können die beschriebenen Aktionen anstatt an Laufrädern an einem oder mehreren Raupenantrieben vorgesehen werden.

Nicht nur im Fahrantrieb oder der Lenkung, sondern auch für Bewegungen der Ladeanlage können Beschleunigungen oder Bremsaktionen der Ladeanlage oder von Komponenten der Ladeanlage vorgesehen werden, um die Fahrstabilität der Maschine sicherzustellen. Hierzu können die bereits ohnehin vorhandenen Verstellmöglichkeiten, beispielsweise ein Hubzylinder oder ein Teleskopantrieb oder dergleichen verwendet werden. Es können jedoch für den erfindungsgemäßen Zweck auch zusätzliche Funktionen, beispielsweise Schwenkbewegungen oder dergleichen vorgesehen werden.

Alle Maßnahmen, die zusätzlich zur Stabilisierung der Maschine während der Fahrt geeignet sind, insbesondere die zuvor beschriebenen Maßnahmen, können auch untereinander in Kombination vorgesehen werden. Dabei können die Maßnahmen zwar gleichzeitig, aber ansonsten unabhängig voneinander oder aber auch funktional gekoppelt eingesetzt werden. Eine Kopplung wäre beispielsweise der Fall, wenn eine Veränderung einer Größe als Funktion einer anderen Größe stattfindet, zum Beispiel wenn eine geschwindigkeitsabhängige oder beschleunigungsabhängige Lenkreaktion zusammen mit einer Beschleunigungs- oder Bremsreaktion vorgenommen wird, wobei die Größe des Lenkradius und/oder der Beschleunigung abhängig von den jeweiligen anderen Werten beeinflusst wird.

Neben den beschriebenen selbsttätig einsetzenden Maschinenreaktionen sind jedoch erfindungsgemäß auch vorbeugende Maßnahmen denkbar, die einem drohenden Kippmoment bereits vor dessen Auftreten entgegen wirken. So kann beispielsweise präventiv auf die möglichen Betriebsbedingungen Einfluss genommen werden, die über die Bedienung durch die Bedienperson erreichbar sind. Dabei sind alle bislang beschriebenen Maschinenreaktionen als vorbeugende Maßnahmen einzusetzen.

So kann beispielsweise die erfindungsgemäße Neigungs- oder Schiebeverstellung auch präventiv eingesetzt werden.

Zusätzlich kann beispielsweise abhängig von einer Geschwindigkeit und/oder einer Beschleunigung und/oder einer Lenkeinstellung und/oder von dem Zustand der Ladeanlage die Ansteuerbarkeit einer oder mehrerer dieser Parameter beeinflusst werden. Es kann beispielsweise bei einer gewissen Geschwindigkeit oder Beschleunigung nur ein bestimmter Bereich von Lenkradien zugelassen werden. Auch der zulässige Zeitablauf von Lenkbewegungen kann so verändert werden.

Ebenso können beispielsweise abhängig von einer Lenkbewegung nur ein bestimmter Geschwindigkeitsbereich oder ein bestimmter Beschleunigungsverlauf zugelassen werden. Auch der Verlauf von Bremsmanövern kann entsprechend beeinflusst werden. Die präventiven Eingriffe können beispielsweise auch abhängig von Bremsbetätigungen bei der Lenkung und/oder der Geschwindigkeit und/oder der Verstellung und/oder der Last der Ladeanlage vorgesehen werden.

Erfindungsgemäß sind somit präventive Maßnahmen als Maschinenreaktion während der Fahrt im Hinblick auf die mögliche bedienerseitige Betätigung der Maschine ebenso einsetzbar, wie aktive selbsttätige Maschineneingriffe zur Stabilisierung der Maschine.

Grundsätzlich sind alle Maßnahmen erfindungsgemäß einsetzbar, die dafür Sorge tragen, dass sich die Schwerpunktslage der Maschine innerhalb der in der jeweiligen Betriebssituation vorliegenden Stabilitätszone der Maschine befindet.

Durch die erfindungsgemäße Verbesserung der Stabilität der Maschine während der Fahrt ist eine solche Maschine nicht nur sicherer, sondern auch wirtschaftlicher zu betreiben, da beispielsweise die Umschlagzeiten der bewegten Güter verkürzt werden können.

Zur Erfassung der Instabilität sind vielfältige Sensoren denkbar. Besonders vorteilhaft ist dabei eine Sensoranordnung im Bereich der erfindungsgemäßen Neigungs- oder Schiebeverstellung. So kann beispielsweise eine Druckdifferenz in einem Neigezylinder, z. B. an einer Pendelachse, öder eine Druckdifferenz in Radnaben durch entsprechende Drucksensoren oder sonstigen Neigungssensoren erfasst werden.

Eine Möglichkeit zur Sensorik eines Kippmomentes besteht beispielsweise auch durch eine Luftdruckmessung in den Laufrädern. Auch Biegesensoren an verschiedenen Maschinenkomponenten sind beispielsweise verwendbar.

Darüber hinaus können auch Beschleunigungssensoren, vorzugsweise im Bereich der Schwerpunktslage vorgesehen werden.

Hilfreich ist auch die Messung der Lastverteilung, beispielsweise durch Wägezellen in unterschiedlichen Maschinenkomponenten, beispielsweise in den Radköpfen. Dies ergibt auch die Möglichkeit, die Schwerpunktslage zu bestimmen.

Eine weitere Möglichkeit der sensorischen Datenerfassung besteht darin, den Zustand von Bedienorganen zu erfassen, die von der Bedienperson betätigt werden. Auch der zeitliche Verlauf der Betätigung kann zur sensorischen Datenerfassung herangezogen werden. So können beispielsweise über die Bedienung eines Gaspedals oder eines Lenkrads mittels entsprechender Sensoren an den Bedienorganen Daten gewonnen werden, die einen Rückschluss auf Geschwindigkeiten, Beschleunigungen, Lenkradien, Lenkverläufe und dergleichen erlauben.

Weiterhin können zur Erfassung der Instabilität auch Daten (-) genutzt werden, bei denen die Umgebung der Maschine, (beispielsweise eine Umgebungskarte), Berücksichtigung findet. Insbesondere vorbeugende Maßnahmen sind sowohl gespeicherte Daten als auch sensorisch erfasste Daten verwendbar. Insbesondere kann auch ein Fahrbahnsensor zur Erfassung der Fahrbahnqualität, beispielsweise hinsichtlich der Oberflächenbeschaffenheit, der Kontur, der möglichen Friktion, oder dergleichen verwendbar. Parameter über die Umgebung der Maschine bzw. eine Geländeüberwachung können beispielsweise über Kameras, Ortungssysteme (GPS, Lasersensoren, Radarsensoren, usw.) vorgesehen werden, um die Fahrbahn bzw. Fahrweg zu analysieren und mögliche Stellgrößen zu erfassen.

Die Intensität, mittels der Korrekturmaßnahmen zur Herstellung der Maschinenstabilität vorgenommen werden, kann ebenfalls abhängig von gemessenen Werten, beispielsweise von einer Geschwindigkeit, einer Beschleunigung oder einer Druckdifferenz zur Erfassung eines drohenden Kippmoments vorgenommen werden.

Ein Ausführungsbeispiel der Erfindung ist in der Zeichnung dargestellt und wird anhand der Figuren nachfolgend näher erläutert.

Im Einzelnen zeigen:
- Figur 1: eine Seitenansicht eines erfindungsgemäßen Teleskopladers mit Ladeanlage in Ausgangsstellung,
- Figur 2: eine Seitenansicht eines Teleskopladers gemäß Figur 1 mit teilweise angehobener Ladeanlage,
- Figur 3: eine Seitenansicht eines Teleskopladers gemäß Figur 2 mit teilweise ausgefahrener Ladeanlage,
- Figur 4: eine Draufsicht eines Teleskopladers mit ausgefahrener und angehobener Ladeanlage in erfindungsgemäß geneigter Stellung,
- Figur 5: trägt eine Rückansicht des Teleskopladers gemäß Figur 4,
- Figur 6: zeigt eine Draufsicht des Teleskopladers gemäß Figur 4 mit verändertem Lenkeinschlag und veränderter Neigung,
- Figur 7: zeigt eine Rückansicht des Teleskopladers gemäß Figur 6 und
- Figur 8: zeigt eine Figur 6 entsprechende Darstellung mit angedeuteter Lenkbewegung als zusätzliche Maschinenreaktion.

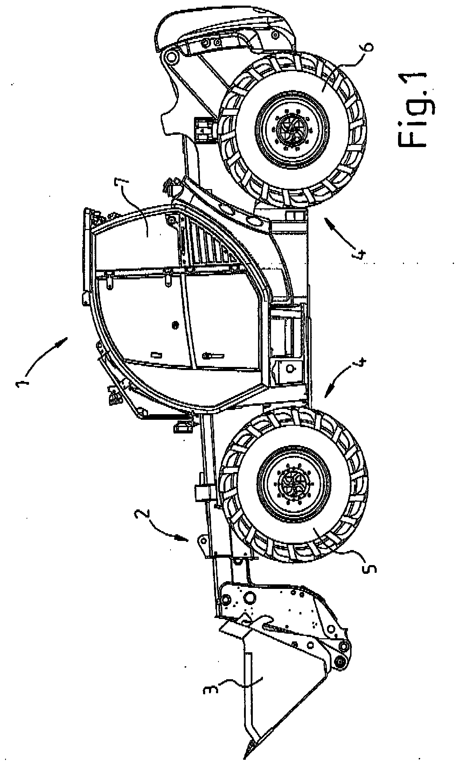

Der Teleskoplader gemäß Figur 1 umfasst in üblicher Weise eine Ladeanlage 2 mit einer Schaufel 3 als Lastaufnahme. Weiterhin verfügt der Teleskoplader 1 über ein Fahrwerk 4 mit Laufrädern 5, 6 sowie eine Fahrerkabine 7 für den Maschinenbediener.

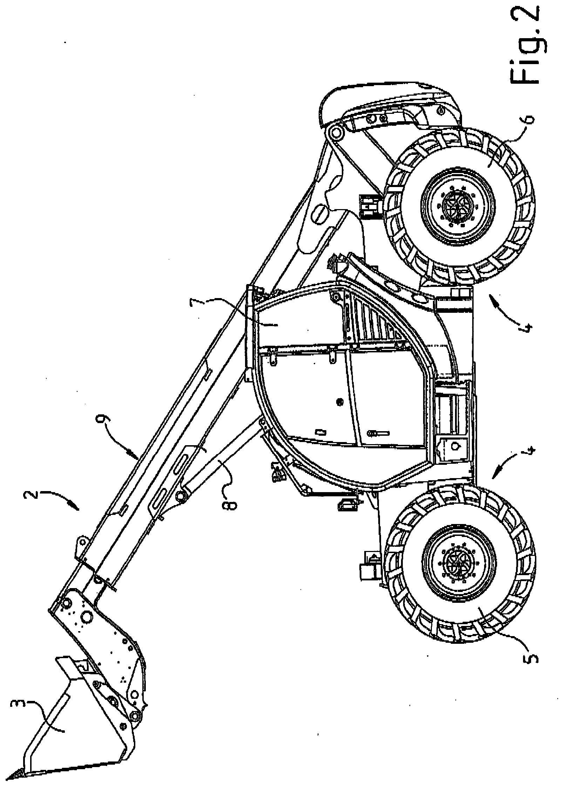

Figur 2 zeigt den Teleskoplader gemäß Figur 1 mit teilweise angehobener Ladeanlage 2. Der Teleskoparm 9 ist mittels eines Hubzylinders 8 in eine Mittelposition angehoben, jedoch noch in eingefahrenem Zustand.

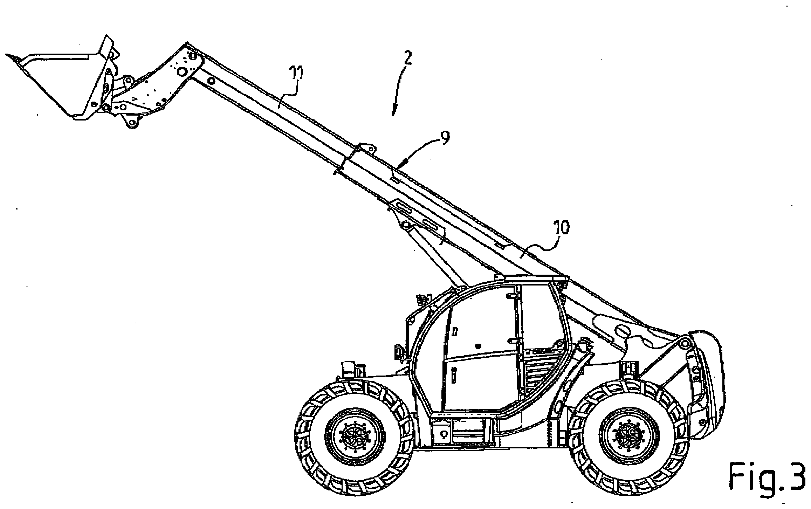

In Figur 3 ist der Teleskoplader gemäß Figur 2 wiederum in einer angehobenen Mittelposition der Ladeanlage 2 dargestellt, wobei der Hubarm 9 nunmehr teilweise ausgefahren ist. Der Hubarm 9 ist durch Verschiebung der Teleskopsegmente 10, 11 in der Länge teleskopierbar.

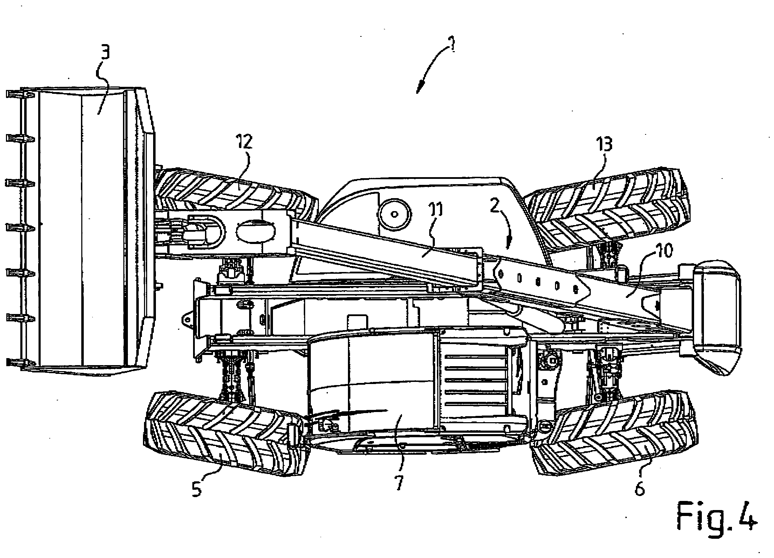

Figur 4 zeigt einen Teleskoplader gemäß den vorangegangenen Figuren in der Draufsicht, wobei die Ladeanlage 2 in der maximalen Hubhöhe und voll ausgefahren ist. In Figur 4 ist erkennbar, dass die Laufräder 5, 6, 12, 13 jeweils einen Lenkeinschlag aufweisen. Aus dieser Figur geht unmittelbar hervor, dass der Teleskoplader 1 eine Allradlenkung aufweist. Solche Teleskoplader mit Allradlenkung sind insbesondere auch in Verbindung mit einem hydrostatischen Allradantrieb bereits handelsüblich. Hierdurch ergeben sich in bekannter Weise vielfältige Vorteile hinsichtlich des Lenkradius bzw. des Lenkverhaltens bzw. des Fahrverhaltens allgemein.

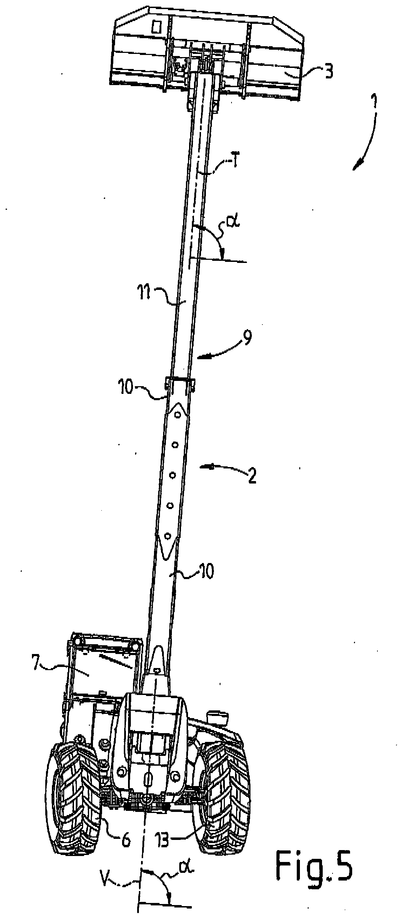

In Figur 5 ist der Teleskoplader gemäß Figur 4 zu sehen, wobei hier deutlich wird, dass der Teleskoplader korrespondierend zum Lenkeinschlag (vgl. Figur 4) eine geneigte Position zeigt. Dies ist beispielsweise anhand der Achse T des Teleskoparms 9 erkennbar. Diese Teleskopachse weist einen Winkel α gegenüber der Horizontalen bzw. einen Neigungswinkel von 90°- α gegenüber der Vertikalen auf. Die Ausführung gemäß Figur 5 erzielt diese Neigung dadurch, dass der gesamte Maschinenaufbau gegenüber dem Fahrwerk entsprechend geneigt ist. Dies wird in Figur 5 auch dadurch veranschaulicht, dass die in Flucht zur Teleskopachse T liegende Vertikalachse V des Maschinenaufbaus den gleichen Winkel α gegenüber der Horizontalen aufweist, während die Laufräder 6, 13 auf einer in Figur 5 angenommenen horizontalen Fläche stehen. Diese Neigungsverstellung kann durch einen oder mehrere Hubzylinder hydraulisch bewerkstelligt werden. Falls eine oder beide Achsen als Pendelachsen ausgeführt sind, können ein oder mehrere solcher Zylinder zwischen der jeweiligen Achse und dem Fahrzeugrahmen wirken.

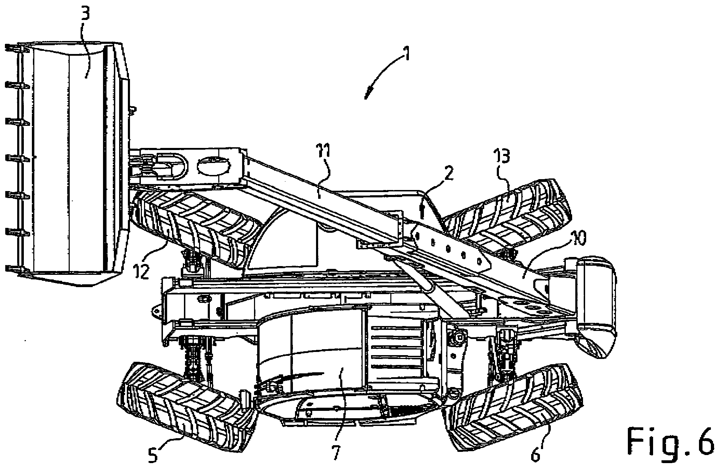

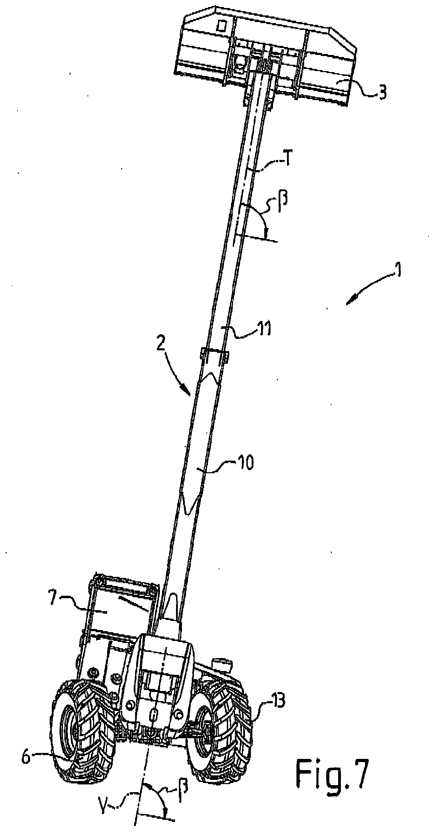

Die Figuren 6 und 7 entsprechen den Figuren 4 und 5, wobei nunmehr ein größerer Lenkeinschlag der Laufräder 5, 6 bzw. 12, 13 eingenommen ist. Zur Stabilisierung der zugehörigen Fahrdynamik wird dementsprechend auch der Neigungswinkel vergrößert, wie in Figur 7 anhand der Teleskopachse T bzw. der Vertikallängsachse V ersichtlich ist. Der Winkel β gegenüber der Horizontalen ist in dieser Stellung deutlich verkleinert, das heißt, der entsprechende Neigungswinkel 90°- β gegenüber der Vertikalen ist entsprechend vergrößert. Wie anhand der Figuren 4 bis 7 erkennbar ist, ist bei dieser Ausführungsform die Neigung des Maschinenaufbaus abhängig vom Lenkeinschlag der Laufräder 5, 6 bzw. 12, 13.

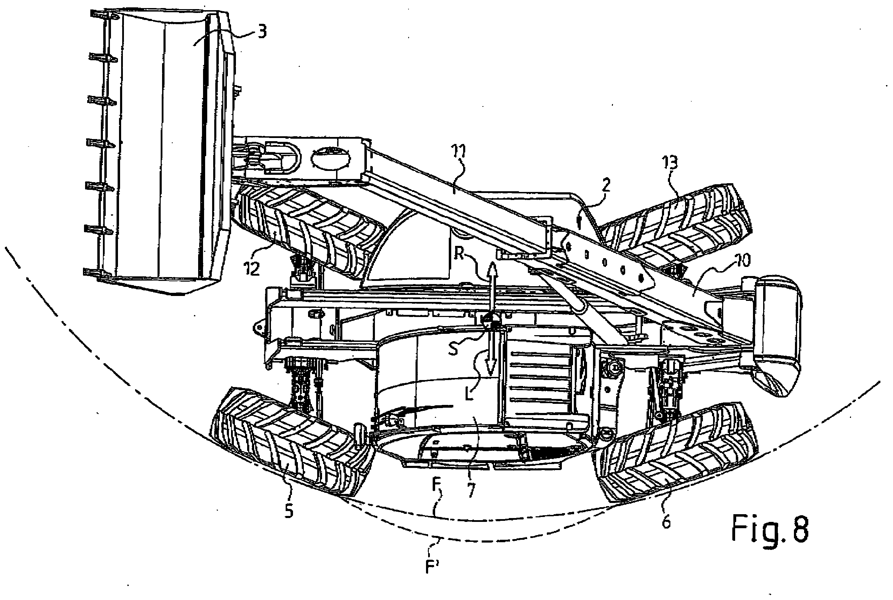

In Figur 8 ist ein Fahrweg F eingezeichnet, der die normale Kurvenfahrt des dargestellten Teleskopladers andeutet. Mit einer Strichlinie ist eine Ausgleichsbewegung des Teleskopladers in Form einer Lenkreaktion dargestellt, wie sie bei einem auftretenden Kippmoment nach rechts als Gegenreaktion denkbar wäre. Der Schwerpunkt S befindet sich im Mittelpunkt des als Schwerpunktsymbol verwendeten, mit zwei schraffierten Quadranten versehenen Kreises. Zwei Pfeile A und I sollen andeuten, welche Kräfte bzw. Momente während der Kurvenfahrt wirken. Die Fliehkraft aufgrund der Kurvenfahrt wirkt in Richtung A nach außen. Die als Korrektur durchgeführte Lenkbewegung bewirkt eine Gegenkraft in Richtung des Pfeils I nach Innen. Eine solche Lenkbewegung kann als Gegenreaktion beispielsweise in Verbindung mit dem Einstellen der ebenfalls in Figur 8 erkennbaren Innenneigung oder einer anderen erfindungsgemäßen Maschinenreaktion des Teleskopladers zur Stabilisierung der Fahrdynamik vorgesehen werden. Vor allem kann dadurch auch einer Vergrößerung des Kippmoments beim Einsetzen der Neigungsverstellung entgegengewirkt werden. Diese Lenkaktion oder -reaktion kann dabei so gering ausfallen, dass sie für die Bedienperson der Maschine kaum spürbar ist und der Fahrweg nur geringfügig verändert wird.

Wie vorstehend bereits beschrieben ist, kann die erfindungsgemäße Sicherheitseinrichtung von zusätzlichen Größen abhängig ausgestaltet werden. Neben der Lenkung bzw. dem Lenkeinschlag, Beschleunigungen oder Geschwindigkeiten bzw. Bremsvorgängen können hierbei auch die eingenommene Höhe der Ladeanlage, die Länge der Ladeanlage für sich alleine oder in Kombination und insbesondere auch in Abhängigkeit voneinander dazu herangezogen werden, um eine stabile Maschinenposition im Fahrbetrieb zu bewirken.

Ein beispielhafter Prozess, wie eine Maschinenreaktion abhängig von verschiedenen Parametern gesteuert werden kann, könnte wie folgt ablaufen. In der Ausgangsposition werden Schwerpunktlage, Geschwindigkeit, der Lenkungswinkel sowie die Beschleunigung sensorisch erfasst.

Die Schwerpunktslage wird hinsichtlich einer Schwerpunktsauslenkung analysiert. Ergibt sich hieraus ein kritischer Bereich, so wird eine sich daraus möglicherweise ergebende Neigung berechnet, die als Gegenreaktion erforderlich ist. Diese Neigung wird entsprechend eingestellt. Aus der Erfassung der Geschwindigkeit, dem Lenkungswinkel sowie der Beschleunigung wird gleichzeitig berechnet, ob eine Rücklenkung als Lenkeingriff notwendig ist. Sofern die Berechnung der Rücklenkung eine notwendige Rücklenkung ergibt, wird diese aktiv vorgenommen.

Nach erfolgter Neigungsverstellung und/oder Rücklenkung wird erneut berechnet, ob die ausgleichenden Kräfte bzw. Momente ausgeglichen sind. Führt diese Prüfung zu einem positiven Ergebnis, beginnt das Verfahren von vorn. Erfolgt ein negatives Ergebnis, wird eine erneute Berechnung der erforderlichen Rücklenkung sowie der erforderlichen Neigung unmittelbar durchgeführt.

Wie bereits erwähnt, handelt es sich bei dem beschriebenen Ablauf nur um eine grobe und beispielhafte Darstellung einer aktiven Steuerung, um eine erfindungsgemäße Maschinenreaktion zu erzeugen. Anstelle einer aktiven Neigungsverstellung oder einer aktiven Rücklenkung wie in dieser Ausführung beschrieben, können als vorbeugende Maßnahme auch die vom Bediener durch Betätigung der Betätigungsorgane erreichbaren Werte für die entsprechenden Parameter entsprechend ausgestaltet werden.

### Bezugszeichenliste:

- 1: Teleskoplader
- 2: Ladeanlage
- 3: Schaufel
- 4: Fahrwerk
- 5: Laufrad
- 6: Laufrad
- 7: Fahrerkabine
- 8: Hubzylinder
- 9: Teleskoparm
- 10: Teleskopsegment
- 11: Teleskopsegment
- 12: Laufrad
- 13: Laufrad
- T: Teleskopachse
- V: Vertikalachse
- S: Schwerpunkt
- I: Pfeil
- A: Pfeil

## Patentansprüche

1. Fahrbare Maschine mit einer Ladeanlage (2), einem Fahrantrieb und einem Fahrwerk (4), wie ein Radlader, ein Teleskoplader oder dergleichen, wobei ein oder mehrere Sensoren zur Erkennung eines instabilen Betriebszustandes oder eines drohenden instabilen während der Fahrt Betriebszustandes vorgesehen sind, der ein Kippmoment mit der Gefahr des seitlichen Umkippens der Maschine beinhaltet, wobei eine Kontrolleinheit vorgesehen ist, die zur selbsttätigen Auslösung einer dem Kippmoment, das die Gefahr des Umkippens der Maschine beinhaltet, entgegenwirkenden Maschinenreaktion oder zu einer vorbeugenden Maschinenreaktion zur Reduzierung eines solchen Kippmomentes während der Maschinenfahrt mittels wenigstens einem Aktor ausgebildet ist, um einen stabilen Betriebszustand zu erzielen, wobei eine Neige- oder Verschiebevorrichtung für eine Maschinenreaktion in Form einer einem drohenden seitlichen Umkippen der Maschine entgegengerichtete seitlich quer zur Fahrtrichtung ausgebildeten Neigungsverstellung oder Verschiebebewegung der Maschine oder einer Maschinenkomponente vorgesehen ist, **dadurch gekennzeichnet, dass** die seitliche Neigungsverstellung oder Verschiebebewegung zwischen dem Fahrwerk und einem Maschinenrahmen und/oder der Ladeanlage vorgesehen ist.

2. Maschine nach Anspruch 1, **dadurch gekennzeichnet, dass** mittels der Kontrolleinheit eine selbsttätige Lenkaktion als Maschinenreaktion vorgesehen ist.

3. Maschine nach einem der vorgenannten Ansprüche, **dadurch gekennzeichnet, dass** mittels der Kontrolleinheit eine Ausgleichsbewegung im Fahrweg während der Fahrt mittels einer selbsttätigen Lenkaktion vorgesehen ist.

4. Maschine nach einem der vorgenannten Ansprüche, **dadurch gekennzeichnet, dass** die seitliche Neigungs- oder Schiebeverstellung für die Lastaufnahme der Ladeanlage vorgesehen ist.

5. Maschine nach einem der vorgenannten Ansprüche, **dadurch gekennzeichnet, dass** eine einem drohenden Umkippen der Maschine entgegenwirkende seitliche Neigung oder Verschiebung von Maschinenkomponenten und/oder der von der Ladeanlage geladenen Last vorgesehen ist.

6. Maschine nach einem der vorgenannten Ansprüche, **dadurch gekennzeichnet, dass** eine Beschleunigungsreaktion zur Bewegung des Maschinenschwerpunkts in die Stabilitätszone der Maschine vorgesehen ist.

7. Maschine nach einem der vorgenannten Ansprüche, **dadurch gekennzeichnet, dass** eine selbsttätige Lenk- und/oder Beschleunigungs- und/oder Bremsaktion der Maschine oder von Maschinenkomponenten vorgesehen ist.

8. Maschine nach einem der vorgenannten Ansprüche, **dadurch gekennzeichnet, dass** unterschiedliche selbsttätige Lenk- und/oder Beschleunigungs- und/oder Bremsaktionen an wenigstens zwei Laufrädern und/oder Antriebsraupen vorgesehen sind.

9. Maschine nach einem der vorgenannten Ansprüche, **dadurch gekennzeichnet, dass** eine selbsttätige Beschleunigung und/oder Bremsaktion der Ladeanlage und/oder von Komponenten der Ladeanlage vorgesehen ist.

10. Maschine nach einem der vorgenannten Ansprüche, **dadurch gekennzeichnet, dass** als vorbeugende Maschinenreaktion eine Veränderung der zugelassenen Werte von Maschinenparametern vorgesehen ist, die seitens einer Bedienperson ansteuerbar sind.

11. Maschine nach einem der vorgenannten Ansprüche, **dadurch gekennzeichnet, dass** als Sensor ein Druckmesser für den Druck in wenigstens einem zur Auslenkung einer Pendelachse des Fahrwerks vorgesehenen Zylinder vorgesehen ist.

## Claims

1. A mobile machine with a loading system (2), a travel drive and a running gear (4), such as a wheeled loader, a telescopic loader or the like, one or more sensors being provided to detect an unstable operating state or an imminent unstable operating state during travel, which state includes a tilting moment with the risk of the machine tipping over sideways, a control unit being provided which is designed automatically to trigger a machine response, which counteracts the tilting moment which includes the risk of the machine tipping over, or a preventive machine response for reducing such a tilting moment during machine travel by means of at least one actuator, so as to achieve a stable operating state, an inclining or translational device being provided for a machine response in the form of a sideways inclination adjustment or translational movement of the machine or a machine component transverse relative to the direction of travel and directed against imminent sideways tipping over of the machine, **characterised in that** the sideways inclination adjustment or translational movement is provided between the running gear and a machine frame and/or the loading system.

2. The machine according to claim 1, **characterised in that** the control unit provides an automatic steering action as machine response.

3. The machine according to one of the preceding claims, **characterised in that** the control unit provides a compensating movement in the travel path during the travel by means of an automatic steering action.

4. The machine according to one of the preceding claims, **characterised in that** the sideways inclination or translational adjustment is provided for the load holder of the loading system.

5. The machine according to one of the preceding claims, **characterised in that** sideways inclination or translation of machine components and/or of the load loaded by the loading system which counteracts imminent tipping over of the machine is provided.

6. The machine according to one of the preceding claims, **characterised in that** an acceleration response is provided to move the centre of gravity of the machine into the stability zone of the machine.

7. The machine according to one of the preceding claims, **characterised in that** an automatic steering and/or accelerating and/or braking action of the machine or machine components is provided.

8. The machine according to one of the preceding claims, **characterised in that** different automatic steering and/or accelerating and/or braking actions are provided at at least two running wheels and/or driving tracks.

9. The machine according to one of the preceding claims, **characterised in that** an automatic acceleration and/or braking action of the loading system and/or of components of the loading system is provided.

10. The machine according to one of the preceding claims, **characterised in that** a change in the allowed values of machine parameters controllable by an operator is provided as the preventive machine response.

11. The machine according to one of the preceding claims, **characterised in that** the sensor provided is a pressure gauge for the pressure in at least one cylinder provided for deflection of a swing axle of the running gear.

## Revendications

1. Engin mobile comprenant un système de chargement (2), un entraînement et un châssis (4), comme une chargeuse sur roues, une chargeuse télescopique ou similaire, un ou plusieurs capteurs servant à détecter un état de fonctionnement instable ou un état de fonctionnement à instabilité imminente pendant le déplacement, qui contient un couple de décrochage avec le risque de renversement sur le côté de l'engin, une unité de réglage conçue pour déclencher automatiquement une réaction de l'engin s'opposant au couple de décrochage, qui contient le risque de renversement de l'engin, ou une réaction de l'engin préventive pour réduire un tel couple de décrochage pendant le déplacement de l'engin au moyen d'au moins un actionneur, pour obtenir un état de fonctionnement stable, un dispositif d'inclinaison ou de déplacement pour une réaction de l'engin étant prévu sous forme d'une inclinaison ou d'un déplacement de l'engin ou d'un élément de l'engin, opposé(e) au renversement latéral imminent de l'engin formé latéralement et transversalement à la direction de déplacement, **caractérisé en ce que** l'inclinaison ou le déplacement latéral s'effectue entre le châssis et un cadre d'engin et/ou du système de chargement.

2. Engin selon la revendication 1, **caractérisé en ce qu'**il est prévu à l'aide d'une unité de réglage une action de direction automatique en tant que réaction de l'engin.

3. Engin selon l'une des revendications précédentes, **caractérisé en ce qu'**il est prévu à l'aide de l'unité de réglage un mouvement de compensation de la trajectoire pendant le déplacement au moyen d'une action de direction automatique.

4. Engin selon l'une des revendications précédentes, **caractérisé en ce que** l'inclinaison ou le déplacement latéral est prévu pour la réception de la charge par le système de chargement.

5. Engin selon l'une des revendications précédentes, **caractérisé en ce qu'**il est prévu une inclinaison ou déplacement latéral d'un élément de l'engin et/ou du chargement chargé par le système de chargement, qui s'oppose à un renversement imminent de l'engin.

6. Engin selon l'une des revendications précédentes, **caractérisé en ce qu'**une réaction d'accélération sert à déplacer le centre de gravité de l'engin dans la zone de stabilité de l'engin.

7. Engin selon l'une des revendications précédentes, **caractérisé en ce qu'**il est prévu une action de direction et/ou d'accélération et/ou de freinage de l'engin ou d'éléments de l'engin.

8. Engin selon l'une des revendications précédentes, **caractérisé en ce qu'**il est prévu différentes actions de direction et/ou d'accélération et/ou de freinage automatiques sur au moins deux roues et/ou chenilles d'entraînement.

9. Engin selon l'une des revendications précédentes, **caractérisé en ce qu'**il est prévu une accélération automatique et/ou une action de freinage du système de chargement et/ou d'éléments du système de chargement.

10. Engin selon l'une des revendications précédentes, **caractérisé en ce qu'**il est prévu en tant que réaction de l'engin préventive une modification des valeurs autorisées des paramètres de l'engin qui peuvent être commandés par un opérateur.

11. Engin selon l'une des revendications précédentes, **caractérisé en ce qu'**il est prévu en tant que capteur un manomètre pour la pression dans au moins un vérin prévu pour décaler un essieu oscillant du châssis.
